# EUROPEAN PATENT SPECIFICATION

(11) **EP 3 085 662 B1**
(45) Date of publication and mention of the grant of the patent: **02.10.2019**
(21) Application number: 16165864.6
(22) Date of filing: 18.04.2016
(51) Int. Cl.: C01B 3/34, C01B 3/38, C01B 3/56, C10L 3/10

(54) **METHOD AND DEVICE FOR GENERATING HYDROGEN GAS FROM A SULPHUROUS HYDROCARBON GAS**
VERFAHREN UND EINRICHTUNG ZUR GENERIERUNG VON WASSERSTOFFGAS AUS EINEM SCHWEFELHALTIGEN KOHLENWASSERSTOFFGAS
PROCÉDÉ ET DISPOSITIF POUR PRODUIRE DU GAZ HYDROGÈNE A PARTIR D'UN HYDROCARBURE GAZEUX CONTENANT DU SOUFRE

(30) Priority: 23.04.2015 NL 2014700
(43) Date of publication of application: 26.10.2016
(73) Proprietor: Green Vision Holding B.V., 6827 AV Arnhem (NL)
(72) Inventor: SCHOLTEN, Anton, 7321 LE APELDOORN (NL); WESTENDORP, Gerard, 6671 BL ZETTEN (NL)
(74) Representative: van Dam, Vincent

(56) References cited:
- EP-A1- 1 146 009
- WO-A1-2012/118742
- WO-A2-2009/090631
- KIKKINIDES E S; SIKAVITSAS V I; YANG R T: "Natural gas desulfurization by adsorption: Feasibility and multiplicity of cyclic steady states", INDUSTRIAL & ENGINEERING CHEMISTRY RESEARCH., vol. 34, no. 1, 1 January 1995 (1995-01-01), pages 255-262, XP055235844, US ISSN: 0888-5885, DOI: 10.1021/ie00040a027

## Description

The invention relates to a method for generating hydrogen gas from a sulphurous first gas mixture comprising at least a hydrocarbon gas, which method comprises the steps of
(i) providing the sulphurous first gas mixture,
(ii) separating the sulphurous first gas mixture into a desulphurized second gas mixture and a sulphurous third gas mixture,
(iii) guiding the second gas mixture separated in the second step (ii) to a converting device for converting the second gas mixture into a fourth gas mixture of substantially hydrogen gas and residual gases, and
(iv) separating the fourth gas mixture into hydrogen gas and residual gases.

Such a method is per se known.

Generating hydrogen gas from a hydrocarbon gas mixture by means of a converting device has drawbacks if the hydrocarbon gas mixture comprises sulphur or sulphur compounds, since many of the usual catalysts in a converting device, for instance a steam reformer, are contaminated by sulphur. Sulphur-tolerant catalysts can provide a solution in some applications, but do not remove the sulphur and/or sulphur compounds which are present.

Depending on the origin or the treatment thereof, natural gas (NG) can comprise a sulphur content in the order of magnitude of 5 vppm. Tetrahydrothiophene (THP) is for instance added as odorant to distributed natural gas in the Netherlands, although other sulphurous compounds such as tert-Butylthiol, other thiols and dimethyl sulphide can also be added as odorant. These sulphur compounds are added in a concentration which is sufficiently low for the natural gas to be used as fuel, wherein combustion gas can be emitted into the atmosphere without problem. The concentration of added sulphur compounds is however too high for the natural gas to be used as raw material for the production of hydrogen gas suitable for generating electricity in a fuel cell.

WO 2009/090631 A2 relates to a monolithic catalyst and uses thereof. This document discloses a step of s separating a sulphurous first gas mixture into a desulphurized second gas mixture and a sulphurous third gas mixture. This step is described as pre-treatment by drying and/or desulfurization 14. Further disclosed is a second separation by means of a second separation in a pressure swing adsorption (PSA) apparatus.

EP 1 146 009 A1 relates to an integrated process for the simultaneous production of CO-rich syngas and pure hydrogen by processing a part of a stream of effluent from a primary reformer. In this process pre-heated natural gas is led to a hydrogenator, in which organic sulphur compounds are hydrogenated to hydrogen sulphide and then retained by ZnO. Further disclosed is a second separation by means of PSA.

It is an object of the invention to provide a method for generating hydrogen gas from a sulphurous first gas mixture, wherein the gas mixture is desulphurized into a product gas mixture with such a low sulphur and/or sulphur compound content that this product gas mixture is suitable as raw material for the production of hydrogen gas or can be applied to generate electricity in fuel cells. The method has to be suitable for continuous application, without interruptions for for instance replacing an adsorbent, and must not generate solid residual waste.

The method has to be suitable for desulphurizing a gas with a low sulphur content, for instance 5 vppm, into a product gas with a very low sulphur content, for instance in the ppb (parts per billion) range.

This object is achieved, and other advantages realized, with a method of the type according to claim 1.

It has been found that Dutch natural gas, to which THT is added in a very low concentration, can be desulphurized with a PSA process according to the invention into a product gas with a sulphur content lying in the ppb range.

The adsorption mass in at least one of the second step (ii) and the fourth step (iv) is for instance selected from the group of materials comprising zeolites, active carbon, pillared clays, metal-organic frameworks (MOFs) and CMS (carbon molecular sieve) material.

The method is particularly advantageous in desulphurizing distributed natural gas, since the third gas mixture (the waste gas) is utilized in economically responsible manner, while the quantity of sulphur emitted during combustion of the waste gas remains far below the permissible limit.

The waste gas from the second PSA process is in a subsequent embodiment for instance used to purge the at least one vessel in the first PSA process, but can likewise be guided to the burner of the steam reformer.

During use of the waste gas from the second PSA process as purge gas in the first PSA process, this waste gas is preferably dried before it is admitted into the at least one vessel as purge gas during the first PSA process.

The invention further relates to a device for generating according to the above described method hydrogen gas from a sulphurous first gas mixture comprising at least a hydrocarbon gas, which device comprises:
first separating means for separating the sulphurous first gas mixture into a desulphurized second gas mixture and a sulphurous third gas mixture, converting means for converting the second gas mixture into a fourth gas mixture of substantially hydrogen gas and residual gases, and second separating means for separating the fourth gas mixture into hydrogen gas and residual gases, wherein the first separating means are provided by a first pressure swing adsorption apparatus (PSA apparatus) comprising at least one vessel in which an adsorption mass for adsorbing sulphurous material is received, and wherein the second separating means are provided by a second pressure swing adsorption apparatus (PSA apparatus) comprising at least one vessel in which an adsorption mass for adsorbing carbon monoxide and carbon dioxide is received wherein the converting means comprise a steam reformer which is provided with a burner for supplying heat to this steam reformer, and means are provided for guiding the third gas mixture from the at least one vessel and to the burner of the steam reformer.

Means are for instance provided here for guiding waste gas from the at least one vessel of the second PSA apparatus and to the burner of the steam reformer.

In a subsequent embodiment means are provided for guiding waste gas from the at least one vessel of the second PSA apparatus to the at least one vessel of the first PSA apparatus for purging thereof.

In an advantageous embodiment means are provided here for drying the waste gas from the second PSA apparatus.

The invention will be elucidated hereinbelow on the basis of exemplary embodiments, with reference to the drawings.

In the drawings
Fig. 1 is a schematic view of a first embodiment of a method and device according to the invention for generating hydrogen gas from a sulphurous gas mixture, and
Fig. 2 is a schematic view of a second embodiment of a method and device according to the invention for generating hydrogen gas from a sulphurous gas mixture.

Corresponding components are designated in the figures with the same reference numerals.

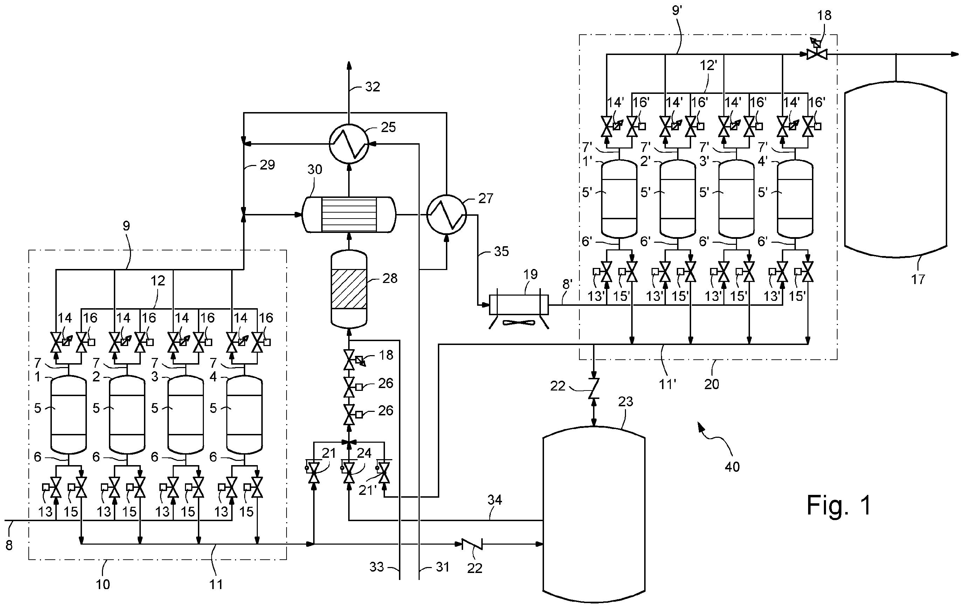

Fig. 1 is a schematic view of a method and device 40 for generating hydrogen gas from a sulphurous gas mixture, with a steam reformer 30, a first PSA apparatus 10 and a second PSA apparatus 20.

First PSA apparatus 10 comprises four vessels 1, 2, 3, 4, each having an adsorption bed with an adsorption mass 5 of sulphur adsorbing material, for instance a zeolite, active carbon, pillared clays, metal-organic frameworks (MOFs) or CMS (carbon molecular sieve) material, and an inlet 6 and an outlet 7. Vessels 1, 2, 3, 4 are connected to four parallel conduits, i.e. a distribution conduit 8 for the sulphurous gas mixture (for instance natural gas to which a sulphurous odorant has been added) for separating, a manifold 9 for the separated product gas (methane), a manifold 11 for the separated waste gas (sulphurous methane), and a distribution conduit 12 for equalization and cleaning gas. Present in each of the conduits 8, 9, 11, 12 for each of the respective vessels 1, 2, 3, 4 is a feed valve 13, a product valve 14, a waste gas valve 15 and an equalization and cleaning valve 16.

Steam reformer 30 is coupled at its input to manifold 9 and to a steam conduit 29 which is coupled via a first heat exchanger 25 and a second heat exchanger 27 to a water conduit 31. Manifold 11 leads via a non-return valve 22 to a storage vessel 23 for waste gas and leads via a pressure-reducing apparatus 21, valves 26 and a control valve 18 for supplying waste gas to a burner 28 for heating steam reformer 30. Storage vessel 23 is coupled to a return conduit 34, which likewise leads via a pressure-reducing apparatus 24, valves 26 and a control valve 18 to burner 28 for supplying waste gas. Burner 28 is coupled to a supply conduit 33 for air. A discharge conduit 32 for the combustion gases of burner 28 leads via the first heat exchanger 25 to the outside world for the purpose of emitting combustion gas with a sulphur content which, if natural gas is used as gas mixture for separating, lies far below the legally permissible and ecologically responsible limits. A mixture of product gas from the first PSA apparatus 10 which is supplied via manifold 9 and steam which is supplied via steam conduit 29 is converted in steam reformer 30 into a hot hydrogen-rich mixture with carbon monoxide, carbon dioxide and non-converted methane. A transport conduit 35 for this latter gas mixture leads via the second heat exchanger 27 and a cooler 19 to a distribution conduit 8' of the second PSA apparatus 20.

The second PSA apparatus 20 likewise comprises four vessels 1', 2', 3', 4', each having an adsorption bed, for instance an adsorption mass 5' of a zeolite, active carbon, pillared clays, metal-organic frameworks (MOFs) or CMS (carbon molecular sieve) material, and an inlet 6' and an outlet 7'. Vessels 1', 2', 3', 4' are connected to four parallel conduits, i.e. the above stated distribution conduit 8', a manifold 9' for the separated product gas (hydrogen gas), a manifold 11' for the separated waste gas (carbon monoxide, carbon dioxide, methane and hydrogen gas), and a distribution conduit 12' for equalization and cleaning gas. Present in each of the conduits 8', 9', 11', 12' for each of the respective vessels 1', 2', 3', 4' is a feed valve 13', a product valve 14', a waste gas valve 15' and an equalization and cleaning valve 16'. Manifold 9' for the separated product gas leads via a control valve 18 to a product storage vessel 17. Manifold 11' for the separated waste gas leads via a non-return valve 22 to storage vessel 23 for waste gas, and likewise leads via a pressure-reducing apparatus 21', valves 26 and a control valve 18 to burner 28.

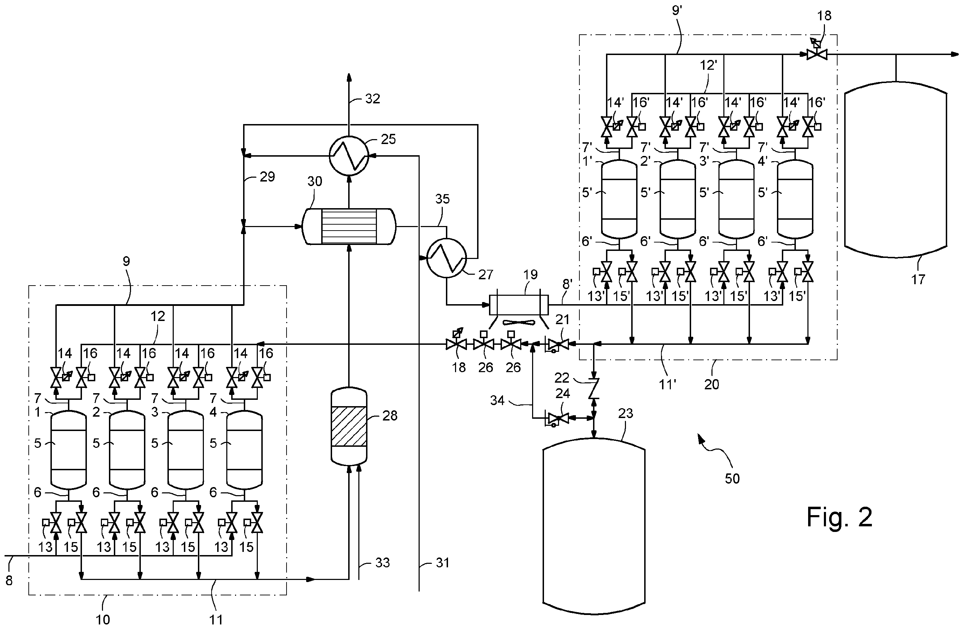

Fig. 2 is a schematic view of a second method and device 50 for generating hydrogen gas from a sulphurous gas mixture, with a steam reformer 30, a first PSA apparatus 10 and a second PSA apparatus 20.

Steam reformer 30, first PSA apparatus 10 and second PSA apparatus 20 correspond to the corresponding apparatuses of the device 40 shown in fig. 1. An important difference is that manifold 11' of the second PSA apparatus 20, which is connected via a non-return valve 22 to storage vessel 23, is likewise coupled either directly via a first pressure-reducing apparatus 21 or indirectly via storage vessel 23 and a second pressure-reducing apparatus 24, via valves 26 and a control valve 18 to distribution conduit 12 for equalization and cleaning gas from the first PSA apparatus 10. A second difference, connected to the first, is that manifold 11 for the waste gas from the first PSA apparatus 10 is not coupled to storage vessel 23. Device 50 provides the advantage that vessels 1, 2, 3, 4 of the first PSA apparatus 10 can be purged and cleaned in particularly effective manner by using the waste gas from the second PSA apparatus 20, which is purified in large measure of sulphur and/or sulphurous compounds, as purge gas in the first PSA apparatus 10.

## Claims

1. Method for generating hydrogen gas from a sulphurous first gas mixture comprising at least a hydrocarbon gas, which method comprises the steps of
(i) providing the sulphurous first gas mixture,
(ii) separating the sulphurous first gas mixture into a desulphurized second gas mixture and a sulphurous third gas mixture,
(iii) guiding the second gas mixture separated in the second step (ii) to a converting device for converting the second gas mixture into a fourth gas mixture of substantially hydrogen gas and residual gases, and
(iv) separating the fourth gas mixture into hydrogen gas and residual gases, wherein
the step (ii) of separating the sulphurous first gas mixture is performed with a first pressure swing adsorption process (PSA process), wherein the first gas mixture is admitted into at least one vessel (1, 2, 3, 4) in which an adsorption mass (5) for adsorbing sulphurous material is received, and
the step (iv) of separating the fourth gas mixture into hydrogen gas and residual gases is performed with a second pressure swing adsorption process (PSA process), wherein the fourth gas mixture is admitted into at least one vessel (1', 2', 3', 4'), in which an adsorption mass (5') for adsorbing at least carbon monoxide and carbon dioxide is received, for the purpose of separating the fourth gas mixture into hydrogen gas and a waste gas, and wherein
the converting device comprises a steam reformer (30) which is provided with a burner (28) for supplying heat to this steam reformer (30), **characterized by** a step (v) of guiding the third gas mixture separated in the second step (ii) from the at least one vessel (1, 2, 3, 4) and to the burner (28) of the steam reformer (30).

2. Method as claimed in claim 1, **characterized by** a step (vi) of guiding waste gas from the second PSA process to the burner (28) of the steam reformer (30).

3. Method as claimed in any of the foregoing claims, **characterized by** a step (vii) of purging the at least one vessel (1, 2, 3, 4) in the first PSA process with waste gas from the second PSA process.

4. Method as claimed in claim 3, **characterized by** the drying of the waste gas from the second PSA process prior to the step (vii) of purging.

5. Method as claimed in any of the foregoing claims, **characterized in that** the adsorption mass (5, 5') is selected from the group of materials comprising zeolites, active carbon, pillared clays, metal-organic frameworks (MOFs) and CMS (carbon molecular sieve) material.

6. Device (40, 50) for generating hydrogen gas from a sulphurous first gas mixture comprising at least a hydrocarbon gas, comprising
first separating means for separating the sulphurous first gas mixture into a desulphurized second gas mixture and a sulphurous third gas mixture,
converting means for converting the second gas mixture into a fourth gas mixture of substantially hydrogen gas and residual gases, and
second separating means for separating the fourth gas mixture into hydrogen gas and residual gases, wherein
the first separating means are provided by a first pressure swing adsorption apparatus (10) (PSA apparatus (10)) comprising at least one vessel (1, 2, 3, 4) in which an adsorption mass (5) for adsorbing sulphurous material is received, and
the second separating means are provided by a second pressure swing adsorption apparatus (20) (PSA apparatus (20)) comprising at least one vessel (1', 2', 3', 4') in which an adsorption mass (5') for adsorbing carbon monoxide and carbon dioxide is received, **characterized in that**
the converting means comprise a steam reformer (30) which is provided with a burner (28) for supplying heat to this steam reformer (30), and
means (11, 21, 26, 28) are provided for guiding the third gas mixture from the at least one vessel (1, 2, 3, 4) and to the burner (28).

7. Device (50) as claimed in claim 6, **characterized in that** means (11', 21', 26, 18; 11', 22, 23, 34, 21) are provided for guiding waste gas from the at least one vessel (1', 2', 3', 4') of the second PSA apparatus (20) and to the burner (28) of the steam reformer (30).

8. Device (50) as claimed in any of the claims 6-7, **characterized in that** means (11', 21, 26, 18; 11', 22, 23, 24) are provided for guiding waste gas from the at least one vessel (1', 2', 3', 4') of the second PSA apparatus (20) and to the at least one vessel (1, 2, 3, 4) of the first PSA apparatus (10) for purging thereof.

9. Device (40, 50) as claimed in claim 6, **characterized in that** means are provided for drying the waste gas from the second PSA apparatus.

10. Device (40, 50) as claimed in any of the claims 6-9, **characterized in that** the adsorption mass (5, 5') is selected from the group of materials comprising zeolites, active carbon, pillared clays, metal-organic frameworks (MOFs) and CMS (carbon molecular sieve) material.

## Patentansprüche

1. Verfahren zur Erzeugung von Wasserstoffgas aus einer schwefelhaltigen ersten Gasmischung, umfassend mindestens ein Kohlenwasserstoffgas, wobei das Verfahren die Schritte umfasst von:
(i) Bereitstellung einer ersten schwefelhaltigen Gasmischung,
(ii) Auftrennung der ersten schwefelhaltigen Gasmischung in eine entschwefelte zweite Gasmischung und eine schwefelhaltige dritte Gasmischung,
(iii) Weiterleitung der in dem zweiten Schritt (ii) abgetrennten zweiten Gasmischung zu einer Umwandlungsvorrichtung zur Umwandlung der zweiten Gasmischung in eine vierte Gasmischung aus im Wesentlichen Wasserstoffgas und Restgas,
(iv) Auftrennung der vierten Gasmischung in Wasserstoffgas und Restgas, wobei
der Schritt (ii) der Auftrennung der ersten schwefelhaltigen Gasmischung durchgeführt wird mit einem ersten Druckwechseladsorbtionsverfahren (PSA-Verfahren), wobei die erste Gasmischung in mindestens ein Gefäß (1, 2, 3, 4) eingeführt wird, in dem eine Adsorptionsmasse (5) zum Adsorbieren von schwefelhaltigem Material aufgenommen ist, und
der Schritt (iv) der Auftrennung der vierten Gasmischung in Wasserstoffgas und Restgas mit einem zweiten Druckwechseladsorbtionsverfahren (PSA-Verfahren) durchgeführt wird, wobei die vierte Gasmischung in mindestens ein Gefäß (1', 2', 3', 4') eingeführt wird, in dem eine Adsorptionsmasse (5') zum Adsorbieren von mindestens Kohlenstoffmonoxid und Kohlenstoffdioxid aufgenommen ist, zum Zwecke der Auftrennung der vierten Gasmischung in Wasserstoffgas und ein Abgas, und wobei
die Umwandlungsvorrichtung einen Dampfreformer (30) umfasst, der mit einem Brenner (28) zur Zufuhr von Wärme zu diesem Dampfreformer (30) ausgestattet ist, **gekennzeichnet durch** einen Schritt (v) der Leitung der dritten Gasmischung abgetrennt in dem zweiten Schritt (ii), von dem mindestens einen Gefäß (1, 2, 3, 4) und zu dem Brenner (28) des Dampfreformers (30).

2. Verfahren wie beansprucht in Anspruch 1, **gekennzeichnet durch** einen Schritt (vi) der Leitung des Abgases aus dem zweiten PSA-Verfahren zum Brenner (28) des Dampfreformers (30).

3. Verfahren wie beansprucht in irgendeinem der vorgehenden Ansprüche, **gekennzeichnet durch** einen Schritt (vii) der Spülung des mindestens einen Gefäßes (1, 2, 3, 4) in dem ersten PSA-Verfahren mit Abgas aus dem zweiten PSA-Verfahren.

4. Verfahren wie beansprucht in Anspruch 3, **gekennzeichnet durch** das Trocken des Abgases aus dem zweiten PSA-Verfahren vor dem Schritt (vii) der Spülung.

5. Verfahren wie beansprucht in irgendeinem der vorgehenden Ansprüche, **dadurch gekennzeichnet, dass** die Adsorptionsmasse (5, 5') ausgewählt ist aus der Gruppe von Materialien umfassend Zeolithe, Aktivkohlenstoff, Säulenlehm, metallorganische Strukturen (MOFs) und CMS (Kohlenstoffmolekularsieb)- Material.

6. Vorrichtung (40, 50) zum Erzeugen von Wasserstoffgas aus einer schwefelhaltigen ersten Gasmischung, umfassend mindestens ein Kohlenwasserstoffgas, umfassend
erste Auftrennungsmittel zur Auftrennung der schwefelhaltigen ersten Gasmischung in eine entschwefelte zweite Gasmischung und eine schwefelhaltige dritte Gasmischung,
Umwandlungsmittel zum Umwandeln der zweiten Gasmischung in eine vierte Gasmischung aus im Wesentlichen Wasserstoffgas und Restgasen, und
zweite Auftrennungsmitttel zum Auftrennen der vierten Gasmischung in Wasserstoffgas und Restgase, wobei die ersten Auftrennungsmittel mit einer ersten Druckwechseladsorbtionsvorrichtung (10) (PSA-Vorrichtung (10)) ausgestattet sind, umfassend mindestens ein Gefäß (1, 2, 3, 4), in dem eine Adsorptionsmasse (5) zum Adsorbieren von schwefelhaltigen Materialien aufgenommen ist, und
die zweiten Auftrennungsmittel mit einer zweiten Druckwechseladsorbtionsvorrichtug (20) (PSA-Vorrichtung (20)) ausgestattet sind, umfassend mindestens ein Gefäß (1', 2', 3', 4'), in dem eine Adsorptionsmasse (5') zum Adsorbieren von Kohlenstoffmonoxid und Kohlenstoffdioxid aufgenommen ist, **dadurch gekennzeichnet, dass** die Umwandlungsmittel einen Dampfreformer (30) umfassen, der mit einem Brenner (28) für die Zufuhr von Hitze zu diesem Dampfreformer (30) ausgestattet ist, und Mittel (11, 21, 26, 28) bereitgestellt sind zum Leiten der dritten Gasmischung von dem mindestens einen Gefäß (1, 2, 3, 4) und zu dem Brenner (28).

7. Vorrichtung (50) wie in Anspruch 6 beansprucht, **dadurch gekennzeichnet, dass** Mittel (11', 21', 26, 18; 11', 22, 23, 34, 21) vorgesehen sind zum Leiten von Abgas von dem mindestens einen Gefäß (1', 2', 3', 4') der zweiten PSA-Vorrichtung (20) und zu dem Brenner (28) des Dampfreformers (30).

8. Vorrichtung (50) wie beansprucht in irgendeinem der Ansprüche 6 bis 7, **dadurch gekennzeichnet, dass** Mittel (11', 21', 26, 18; 11', 22, 23, 34, 21) vorgesehen sind zum Leiten von Abgas von dem mindestens einen Gefäß (1', 2', 3', 4') der zweiten PSA-Vorrichtung (20) und zu dem mindestens einen Gefäß (1, 2, 3, 4) der ersten PSA-Vorrichtung (10) zum Spülen davon.

9. Vorrichtung (40, 50) wie in Anspruch 6 beansprucht, **dadurch gekennzeichnet, dass** Mittel zum Trocken des Abgases aus der zweiten PSA-Vorrichtung bereitgestellt sind.

10. Vorrichtung (40, 50) wie beansprucht in irgendeinem der Ansprüche 6-9, **dadurch gekennzeichnet, dass** die Adsorptionsmasse (5') ausgewählt ist aus der Gruppen von Materialien, umfassend Zeolithe, Aktivkohlenstoff, Säulenlehm, metallorganische Strukturen (MOFs) und CMS (Kohlenstoffmolekularsieb)- Material.

## Revendications

1. Procédé pour générer de l'hydrogène gazeux à partir d'un premier mélange gazeux sulfureux comprenant au moins un hydrocarbure gazeux, lequel procédé comprend les étapes suivantes :
(i) obtention du premier mélange de gaz sulfureux,
(ii) séparation du premier mélange gazeux sulfureux en un deuxième mélange gazeux désulfuré et un troisième mélange gazeux sulfureux,
(iii) guidage du deuxième mélange gazeux séparé dans la deuxième étape (ii) vers un dispositif de conversion pour convertir le deuxième mélange gazeux en un quatrième mélange gazeux constitué principalement d'hydrogène gazeux et de gaz résiduels, et
(iv) séparation du quatrième mélange gazeux en hydrogène gazeux et gaz résiduels,
dans lequel
l'étape (ii) de séparation du premier mélange gazeux sulfureux est effectuée avec un premier traitement d'adsorption à pression modulée (traitement PSA), dans lequel le premier mélange gazeux est admis dans au moins un récipient (1, 2, 3, 4) dans lequel une masse d'adsorption (5) pour adsorber le matériau sulfureux est reçue, et
l'étape (iv) de séparation du quatrième mélange gazeux en hydrogène gazeux et gaz résiduels est effectuée avec un deuxième traitement d'adsorption à pression modulée (traitement PSA), dans lequel le quatrième mélange gazeux est admis dans au moins un récipient (1', 2', 3', 4'), dans lequel une masse d'adsorption (5') pour adsorber au moins le monoxyde de carbone et le dioxyde de carbone est reçue, dans le but de la séparation du quatrième mélange gazeux en hydrogène gazeux et en gaz résiduaire, et dans lequel
le dispositif de conversion comprend un reformeur à vapeur (30) qui est doté d'un brûleur (28) pour fournir de la chaleur à ce reformeur à vapeur (30),
**caractérisé par** une étape (v) de guidage du troisième mélange gazeux séparé dans la deuxième étape (ii) depuis l'au moins un récipient (1, 2, 3, 4) et vers le brûleur (28) du reformeur à vapeur (30).

2. Procédé selon la revendication 1, **caractérisé par** une étape (vi) de guidage du gaz résiduaire depuis le deuxième traitement PSA vers le brûleur (28) du reformeur à vapeur (30).

3. Procédé selon l'une quelconque des revendications précédentes, **caractérisé par** une étape (vii) de purge de l'au moins un récipient (1, 2, 3, 4) dans le premier traitement PSA avec du gaz résiduaire provenant du deuxième traitement PSA.

4. Procédé selon la revendication 3, **caractérisé par** le séchage du gaz résiduaire provenant du deuxième traitement PSA avant l'étape (vii) de purge.

5. Procédé selon l'une quelconque des revendications précédentes, **caractérisé en ce que** la masse d'adsorption (5, 5') est choisie dans le groupe de matériaux comprenant les zéolites, le charbon actif, les argiles structurées en piliers, les charpentes métalliques-organiques (MOF) et les matériaux CMS (tamis moléculaires carbonés).

6. Dispositif (40, 50) pour générer de l'hydrogène gazeux à partir d'un premier mélange gazeux sulfureux comprenant au moins un hydrocarbure gazeux, comprenant
des premiers moyens de séparation pour séparer le premier mélange gazeux sulfureux en un deuxième mélange gazeux désulfuré et un troisième mélange gazeux sulfureux,
des moyens de conversion pour convertir le deuxième mélange gazeux en un quatrième mélange gazeux constitué principalement d'hydrogène gazeux et de gaz résiduels, et
des deuxièmes moyens de séparation pour séparer le quatrième mélange gazeux en hydrogène gazeux et gaz résiduels,
dans lequel
les premiers moyens de séparation sont assurés par un premier dispositif d'adsorption à pression modulée (10) (dispositif PSA (10)) comprenant au moins un récipient (1, 2, 3, 4) dans lequel une masse d'adsorption (5) pour adsorber le matériau sulfureux est reçue, et
les deuxièmes moyens de séparation sont assurés par un deuxième dispositif d'adsorption à pression modulée (20) (dispositif PSA (20)) comprenant au moins un récipient (1', 2', 3', 4'), dans lequel une masse d'adsorption (5') pour adsorber au moins le monoxyde de carbone et le dioxyde de carbone est reçue,
**caractérisé en ce que**
les moyens de conversion comprennent un reformeur à vapeur (30) qui est doté d'un brûleur (28) pour fournir de la chaleur à ce reformeur à vapeur (30), et
des moyens (11, 21, 26, 28) sont fournis pour guider le troisième mélange gazeux depuis l'au moins un récipient (1, 2, 3, 4) et vers le brûleur (28).

7. Dispositif (50) selon la revendication 6, **caractérisé en ce que** des moyens (11', 21', 26, 18 ; 11', 22, 23, 34, 21) sont fournis pour guider le gaz résiduaire depuis l'au moins un récipient (1', 2', 3', 4') du deuxième dispositif PSA (20) et vers le brûleur (28) du reformeur à vapeur (30).

8. Dispositif (50) selon l'une quelconque des revendications 6 et 7, **caractérisé en ce que** des moyens (11', 21, 26, 18 ; 11', 22, 23, 24) sont fournis pour guider le gaz résiduaire depuis l'au moins un récipient (1', 2', 3', 4') du deuxième dispositif PSA (20) et vers l'au moins un récipient (1, 2, 3, 4) du premier dispositif PSA (10) pour la purge de celui-ci.

9. Dispositif (40, 50) selon la revendication 6, **caractérisé en ce que** des moyens sont fournis pour sécher le gaz résiduaire provenant du deuxième dispositif PSA.

10. Dispositif (40, 50) selon l'une quelconque des revendications 6 à 9, **caractérisé en ce que** la masse d'adsorption (5, 5') est choisie dans le groupe de matériaux comprenant les zéolites, le charbon actif, les argiles structurées en piliers, les charpentes métalliques-organiques (MOF) et les matériaux CMS (tamis moléculaires carbonés).
